# EUROPEAN PATENT SPECIFICATION

(11) **EP 0 567 132 B1**
(45) Date of publication and mention of the grant of the patent: **13.08.1997**
(21) Application number: 93106573.4
(22) Date of filing: 22.04.1993
(51) Int. Cl.: H01M 10/34, H01M 10/26

(54) **Sealed type nickel/hydrogen alkaline storage battery**
Gasdichter alkalischer Nickel-Wasserstoff-Akkumulator
Accumulateur alcalin scellé du type nickel/hydrogène

(30) Priority: 22.04.1992 JP 129679/92; 15.06.1992 JP 180347/92
(43) Date of publication of application: 27.10.1993
(73) Proprietor: FURUKAWA DENCHI KABUSHIKI KAISHA, Yokohama-shi, Kanagawa-ken (JP)
(72) Inventor: Furukawa, Jun, c/o Iwakijigyosho, Shimofunao-cho, Iwaki-shi, Fukushima-ken (JP); Mizuno, Takashi, c/o Iwakijigyosho, Shimofunao-cho, Iwaki-shi, Fukushima-ken (JP)
(74) Representative: Schmidt-Evers, Jürgen, Dipl.-Ing.

(56) References cited:
- EP-A- 0 419 220
- EP-A- 0 477 461
- EP-A- 0 523 284
- DE-A- 4 109 764
- GB-A- 2 162 994
- PATENT ABSTRACTS OF JAPAN vol. 16, no. 120 (E-1182)26 March 1992
- PATENT ABSTRACTS OF JAPAN vol. 9, no. 248 (E-347)(1971) 4 October 1985
- PATENT ABSTRACTS OF JAPAN vol. 4, no. 32 (E-2)(514) 19 March 1980

## Description

This invention relates to a sealed type nickel/hydrogen alkaline storage battery.

Among secondary batteries or cells well known heretofore are a nickel/cadmium battery or cell and a lead acid storage battery or cell, etc. However, they have such a common disadvantage that the energy density per unit weight or unit volume is comparatively small. To do away with said disadvantage, there has been proposed a nickel/hydrogen battery or cell in which the positive electrode is made of nickel oxide such as nickel hydroxide, the negative electrode is made of a hydrogen-occlusion alloy capable of electrochemically occluding and releasing a large quantity of hydrogen, and the electrolyte is an alkaline aqueous solution and which produce a higher energy density. Hydrogen-occlusion alloys used in this negative electrode include a binary alloy such as LaNi₅ and a modified multi-element type alloy such as one of LaNi₅ series in which a portion of Ni contained in the LaNi₅ alloy has been substitued by Co, Al, Mn or the like in further, for an economical reason, one of MmNi series in which the La element contained in the LaNi₅ series has been substituted by misch metal (Mm). A misch metal as used herein refers to a mixed rare earth metal prepared by electrolysis of fused rare earth chlorides. Meanwhile, an aqueous alkaline solution used as the electrolyte therein (see e.g. EP-A-0 477 461 and EP-A-0 419 220) comprises potassium hydroxide only or a mixture of potassium hydroxide as the main component and lithium hydroxide or sodium hydroxide or a mixture of lithium hydroxide and sodium hydroxide as a secondary component, and the specific gravity of any of electrolyte solution is about 1.22 in general and is 1.30 even at the maximum.

However, even with such a negative electrode made of the above-mentioned improved version of the hydrogen/occlusion alloy as mentioned above, the life of such a conventional nickel/hydrogen battery or cell as above stands only for less than 500 cycles of charge-discharge operation, so that it is much desired to make a nickel/hydrogen battery or cell having a longer life of more than 500 cycles.

In addition, the above-mentioned conventional battery or cell has not been able to meet all of performance requirements including charge-discharge cycle characteristic, internal pressure characteristic and high-rate discharge characteristic.

Therefore, it is much desired to produce a nickel/hydrogen battery or cell meeting the foregoing performance requirements.

The object of the present invention is to provide a sealed type nickel/hydrogen alkaline storage battery which is free from the defects of the above-mentioned conventional battery and meets all of the foregoing performance requirements, and is so constructed that a plate assembly assembled by a positive electrode comprising nickel oxide such as nickel hydroxide, a negative electrode comprising a hydrogen-occlusion alloy, and a separator interposed between the positive electrode and the negative electrode, is contained in a battery container together with an alkaline electrolyte, and is covered and hermetically sealed, and which is characterized in that the electrolyte is composed of potassium hydroxide, lithium hydroxide and sodium hydroxide out of which the potassium hydroxide accounts for 75 wt. % or more of the total weight of the three components, and the specific gravity of the resultant electrolyte is adjusted to fall in the range of 1.31 to 1.40.

Fig. 1 is a graph showing the effect of electrolyte's specific gravity change on the cycle life of a nickel/hydrogen battery or cell.

Fig. 2 is a comparative graph showing for comparsion charge-discharge cycle characteristics of sealed type nickel/hydrogen storage batteries or cells using the electrolytes prepared according to the present invention and those of the batteries or cells using comparative-use electrolytes.

In the following, embodying examples of the present invention will be described in detail.

Commercially available powdered misch metal, nickel, cobalt and aluminium were weighed and mixed in a predetermined compounding ratio of, for example, MmNi_{4.0}Co_{0.5}Al_{0.5}. This mixture was heated and molten by means of an arc melting process and thereafter cooled to obtain a lump of hydrogen-occlusion alloy. This lump of the alloy was mechanically pulverized into powder of 0.104 mm (150 mesh) or less. This fine powder was mixed with powdered nickel carbonyl of 10 wt. % and powdered tetrafluoroethylene of 3 wt. % as a binding agent, and the resultant mixture was then pressed and adhered onto an electrical collector such as a nickel-made gauze to make a plate-like hydrogen-occlusion electrode. This electrode plate, which is served as a negative electrode, and a known paste-type nickel electrode plate, which is served as a positive electrode, were stacked with each other through a separator placed therebetween, so as to be formed into a plate assembly. The plate assembly was then rolled into a spiral one. The spiral plate assembly was put into a cylindrical battery container. The plate assembly can also, if desired, be used in a flat state in a square container. An electrolyte of a predetermined amount, for instance, 2.0 cc was poured into the container, and a battery cover was attached to the container by means of an ordinary process to produce a UM-3 sized cylindrical sealed type nickel/hydrogen alkaline storage battery or cell of 1050 mAH. In this embodying example, there were prepared such alkaline electrolytes that are composed of potassium hydroxide alone, but are varied in specific gravity ranging from 1.20 to 1.45 (at 20°C), and 2.0 cc of each of the respective electrolytes having different specific gravities was put into each of the respective containers so as to make available a pluralty of test-purpose nickel/hydrogen batteries or cells, each using the electrolyte having a different specific gravity in the above-mentioned range.

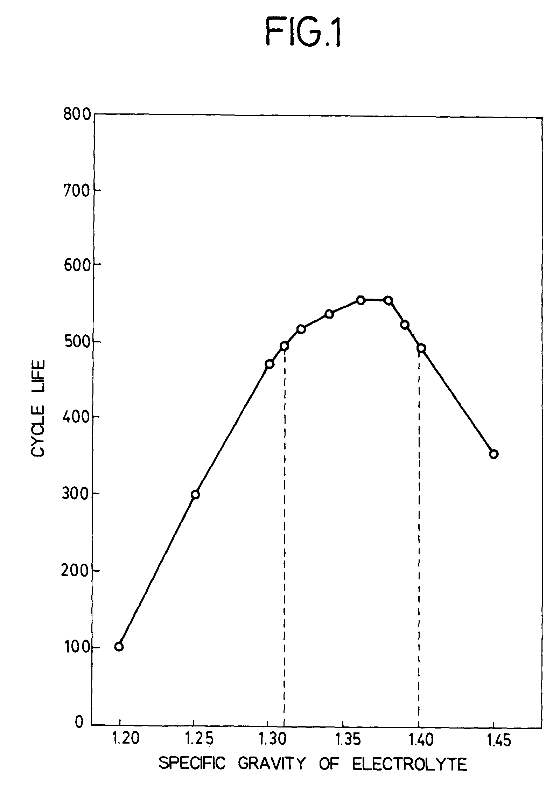

Next, using these nickel/hydrogen test cells, a life test was carried out as described in the following. Namely, the test conditions included that each test cell was charged with 1 C current for 75 minutes and discharged with 1 C current until the cell voltage was dropped to 1.0 V, and this charge-discharge operation was repeated until the discharge capacity of the cell became 650 mA. The test was carried out at a temperature in the range of 20°C - 25°C. Fig. 1 shows the test results.

As is clear from Fig. 1, the conventional cells using the alkaline electrolytes having 1.30 or less in specific gravity give the charge-discharge cycle of 480 cycles or less which does not reach 500 cycles, while those with the electrolytes having specific gravities falling in the range of 1.31 to 1.40 give a longer cycle life of 500 cycles or more. Above all, those with the specific gravities in the range of 1.35 to 1.39 are preferable, because the electrolytes having such specific gravity ranges assure much longer cycle life of 520 to 560 cycles. Further, it has been observed that, with the electrolytes having a specific gravity of 1.41 or more, that is, higher than 1.40, the cycle life of the cells was dropped to a level lower than 500 cycles. While what has caused such a decline is yet to be determined, it is assumed that the movement of the OH ions in the electrolyte with such a high specific gravity could become slower contrary to general expectation, thus resulting in lowering in the charge-discharge efficiency.

In the above-mentioned embodying examples, an electrolyte aqueous solution composed of potassium hydroxide alone was used as the electrolyte. However, even when there was used as the alkaline electrolyte an aqueous solution composed of a mixture of potassium hydroxide as a main component and a small quantity of lithium hydroxide or that of sodium hydroxide or an aqueous solution composed of potassium hydroxide as a main component and a small quantity of a mixture of lithium hydroxide and sodium hydroxide, with the specific gravity of such electrolyte being in the range of 1.31 to 1.40. The result was an improvement in the cycle life that are equal to or better than the case of using as an electrolyte composed of potassium hydroxide alone. The compounding ratio of these alkaline components is, for example, 100 : 20 in the case of potassium hydroxide and lithium hydroxide or sodium hydroxide, and 100 : 15 : 5 or preferably 100 : 17 : 3 in the case of potassium hydroxide, lithium hydroxide and sodium hydroxide, all in terms of weight ratio.

The reason why the improvement in the cycle life can be brought about by the electrolyte of which the specific gravity is in the range of 1.31 - 1.40 is not clear completely, but it is presumed that the amount of hydroxide ions is proper and sufficient in the foregoing specific gravity range, and movement of the OH ions can be made speedily, so that the charge-discharge efficiency can be improved and is not lowered readily, and accordingly the battery cycle life goes beyond 500 cycles.

Next, an embodying example of the present invention for improvement of all of the charge-discharge cycle characteristic, internal pressure characteristic and the high-rate discharge caracteristic of a sealed type nickel/hydrogen alkaline storage battery or cell will be explained in detail.

A hydrogen-occlusion electrode composed mainly of a hydrogen-occlusion alloy of a desired composition and manufactured by an ordinary known process was used as the negative electrode. This negative electrode plate and a positive electrode plate made of nickel hydroxide by a conventional process were stacked with each other through a nylon separator interposed therebetween, to form a plate assembly, and the plate assembly is inserted into a cylindrical container after being rolled up into a spiral one or into a square container without being rolled up into a spiral, and a predetermined amount of the electrolyte was poured into the container, and a battery cover was attached thereto to seal it hermetically, so that there was produced a sealed type cylindrical or square alkaline nickel-hydrogen storage battery or cell. The abovementioned process and construction are not substantially different from the conventional ones.

According to the present invention, the alkaline electrolyte used in the above-mentioned battery or cell is characterized in that it is composed of three components, namely, potassium hydroxide, lithium hydroxide and sodium hydroxide, and out of which the potassium hydroxide accounts for 75 wt. % or more of the total weight of the three components, and the electrolyte is so prepared as to have the specific gravity adjusted to fall in the range of 1.31 to 1.40. In the case of the composition of the two or three components, it is in general that the compounding range of potassium hydroxide is in the range of 75 wt.% - 99.5 wt. %. In the case of use of potassium hydroxide is 99.5 wt %, the remainder of 0.5 wt. % is preferably lithium hydroxide, though the remainder of 0.5 wt. % may be sodium hydroxide.

Now, embodying examples of the present invention will be explained in more detail as follows.

A hydrogen-occlusion alloy comprising Mm_{3.5}Co_{1.0}Al_{0.5} was mechanically pulverized and the resultant powdered alloy, powdered polyvinylidene fluoride (PVdF) as a binding agent, and powdered nickel as an electroconductive agent were mixed together in a proper compounding amount ratio, and a mixture thereof was added with a proper amount of carboxy methyl cellulose (CMC) water solution and was mixed uniformly. For instance, the foregoing powder alloy of 1000 g, powdered polyvinylidene fluoride of 30 g and powdered nickel of 150 g were mixed, and a mixture thereof was added with 1.2 % CMC water solution of 250 g and was mixed. The resultant pasty mixture was applied to both surfaces of a perforated steel sheet plated with nickel, and was dried, roll-pressed and put in a heating furnace, and it was heated in vacuum condition under the atmosphere of an inert gas such as nitrogen, argon, etc. in the range of 160 - 200°C, for instance, for two hours at 170°C to manufacture a hydrogen-occlusion plate.

On the other hand, a nickel electrode plate was manufactured as follows: Powdered nickel hydroxide and powdered nickel carbonyl were mixed in a proper mixing ratio, for instance, in the ratio of 90 : 10 by weight, and a mixture thereof was added and stirred with a CMC water solution of 1.2 %. For instance, 40 g of the foregoing 1.2 % CMC solution was added to 100 g of the mixture. The resultant paste was then applied to be filled in a foam nickel substrate, dried and roll-pressed together to manufacture a nickel electrode plate.

The hydrogen-occlusion electrode plate thus produced was used as the negative electrode and the nickel electrode plate thus produced was used as the positive electrode. Namely, the negative electrode plate and the positive electrode plate were stacked with each other through a nylon separator of which the thickness is 0.18 mm, so as to form a plate assembly, and the plate assembly was rolled up to make a rolled plate assembly. This plate assembly was inserted into a cylindrical iron made container plated with nickel, and an electrolyte is put in the container, and a cover is applied and sealed hermetically in a conventional manner, to manufacture a sealed type cylindrical nickel/hydrogen alkaline storage battery or cell. In this manufacturing process, as the electrolyte, each of respective electrolytes having respective different components and specific gravities as shown in the following Table 1, in the course of manufacturing the above-mentioned battery or cell. Those batteries are labeled as Cell A through Cell I in Table 1. The weight-percentage values of the components, KOH, NaOH and LiOH are indicated as dried or solid matter as calculated on the basis of the total weight of the three components taken as 100%.

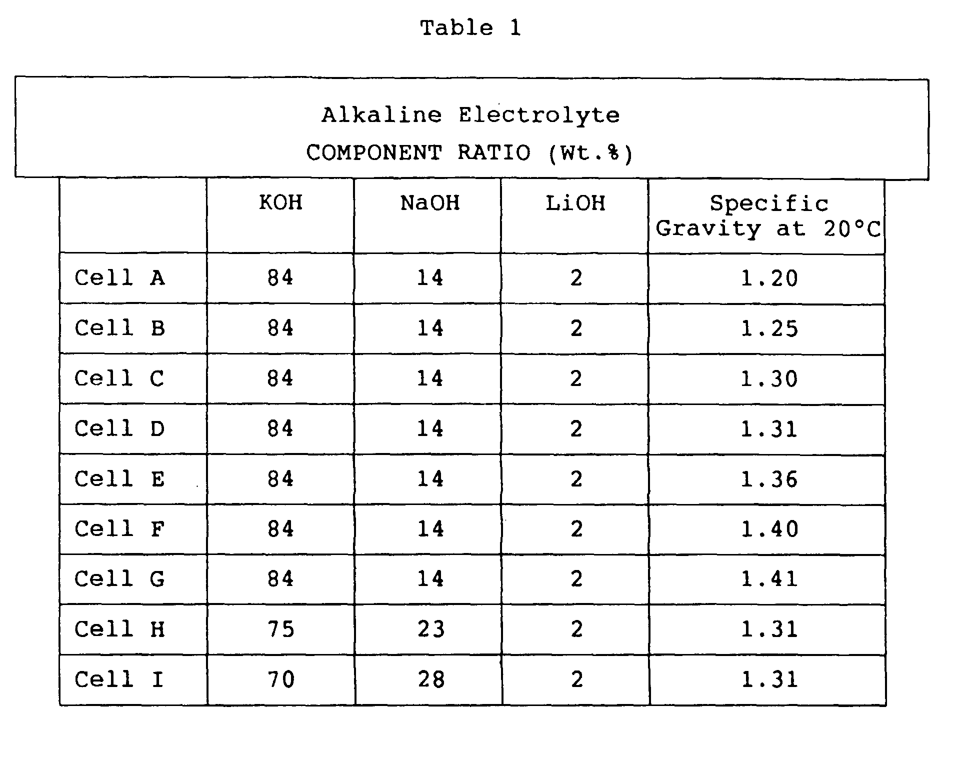

The following Table 2 shows the respective concentrations of the respective electrolytes and respective weight percents of the three components used in the respective Cell A to I.

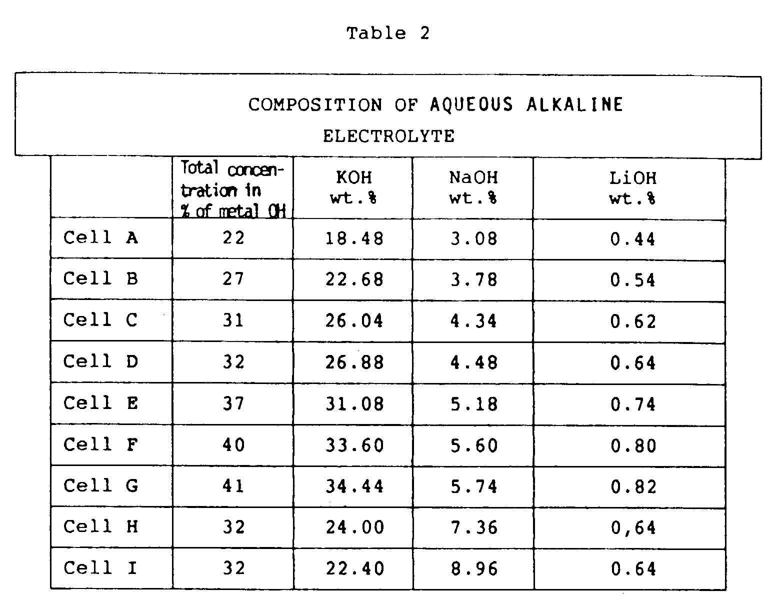

These batteries, that is, Cell A through Cell I were all subjected to a charge-discharge cycle test, an internal pressure test and a high-rate discharge test as described in the following. The rated capacity of each of the test batteries, that is, Cell A through Cell I was 1000 mAh.

### 1) Charge-discharge cycle test:

For the charge-discharge cycle test, each test cell was charged at 1A for 75 minutes and discharged at 1A to the final voltage of 1V. The test was conducted at room temperature. Fig. 1 shows the results thereof.

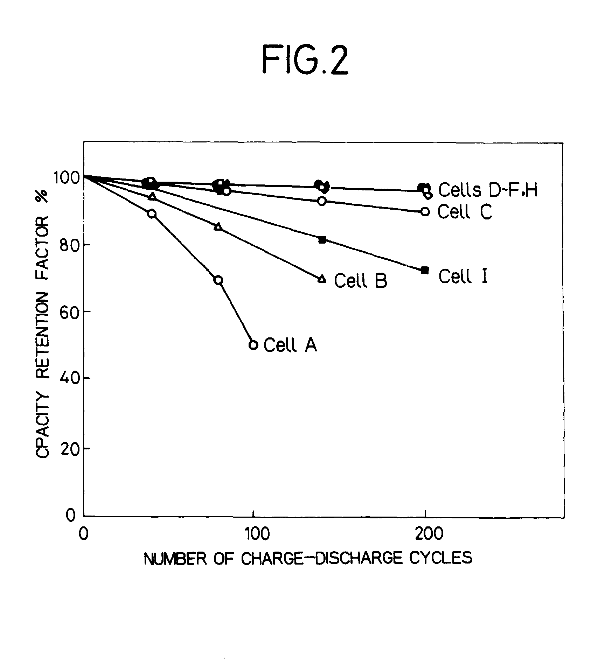

As is clear from Fig. 2 and Table 1, the batteries or cells suffered a greater capacity decrease and gave a shorter cycle life even with the same composition ratio of the three components of the electrolyte with increase in the charge-discharge cycles, if the specific gravity of the electrolyte was 1.30 or less, as indicated by Cell A, Cell B and Cell C. It has also been shown that even when the electrolyte with the same specific gravity, e.g. 1.31 is used, the decrease in the capacity is greater and the charge-discharge cycle life is shorter as indicated by Cell I, if the weight % of KOH is as low as 70 weight%. As for Cell G in which the specific gravity of the electrolyte is 1.41. it has been found that part of the whole of KOH, NaOH and LiOH once dissolved in the electrolyte becomes deposited at room temperature, and it is unsuitable for the electrolyte for the cell.

Compared with the foregoing cells, it has been shown that, with Cell D, Cell E, Cell F and Cell H all representing the embodying examples of the present invention wherein the mixing ratio for the KOH component of the alkaline electrolyte is 75 wt. % or higher and the specific gravity is in the range of 1.31 to 1.40, there is brought about good diffusion or movement of the OH ions in the electrolyte even at such a high rate discharge as 1A, so that a large capacity is obtained and the charge efficiency also is improved and in addition the lowering in the capacity is small even with the progress of the charge-discharge cycle operation, so that the discharge capacity which is about as large as the initial capacity can be kept or retained, and it has been observed that the cycle life is prolonged.

### 2) Internal pressure test:

For the internal pressure test, the test cells were charged at 1A for 4.5 hours and discharged at 0.2A to the final voltage of 1V. The results thereof are shown in Table 3.

**Table 3**

| INTERNAL PRESSURE | | | | INTERNAL PRESSURE | |
|---|---|---|---|---|---|
| | (Kgf/cm²)^{x} | N/cm² | | (Kgf/cm²)^{x} | N/cm² |
| CELL A | 24 | 235.36 | CELL E | 11 | 107.87 |
| CELL B | 21 | 205.94 | CELL F | 10 | 98.07 |
| CELL C | 13 | 127.49 | CELL H | 11 | 107.87 |
| CELL D | 11 | 107.87 | CELL I | 20 | 196.13 |

| | | | | | |
|---|---|---|---|---|---|
| x: 1 Kgf/cm² (= 1 kilogram force/cm²) = 9.80665 N/cm² | | | | | |

As clearly seen from Table 1 and Table 3, comparsion of Cell D with Cell C, for instance, clearly shows that the internal pressure becomes higher even when the ratio by weight percentage of the components of the electrolyte is the same, if the specific gravity is less than 1.31. From another comparsion of Cell H with Cell I, it is also clear that the internal pressure is increased even when the specific gravity of the electrolyte is 1.31 if the weight ratio of KOH is less than 75 wt.%. In the final analysis, it can be assumed that, where the specific gravity of the electrolyte is in the range of 1.31 to 1.40 and the composition ratio of KOH is 75 wt. % or more as in Cell D, Cell E, Cell F and Cell H, the charging efficiency and the diffusion or movement of the OH ions become improved to give consistent or stable performance with a lower internal pressure.

### 3) High-rate discharge test:

For the high-rate discharge test, the test cells were charged at 0.2A for 7.5 hours and discharged at 0.2A, 1.5A and 3A respectively to the final voltage of 1 V. The test was conducted at 20°C. The results thereof are shown in Table 4.

**TABLE 4**

| | DISCHARGE CAPACITY (mAh) | | |
|---|---|---|---|
| | 0.2A | 1.5A | 3A |
| CELL A | 990 | 847 | 570 |
| CELL B | 1050 | 937 | 819 |
| CELL C | 1105 | 990 | 914 |
| CELL D | 1177 | 1047 | 967 |
| CELL E | 1202 | 1063 | 966 |
| CELL F | 1241 | 1089 | 969 |
| CELL H | 1110 | 998 | 940 |
| CELL I | 1090 | 988 | 877 |

As clearly seen from Table 1 and Table 4, only when the specific gravity of the electrolyte is 1.31 or higher at 20°C and the component ratio for KOH is 75 wt.% or higher as in Cell D, Cell E, Cell F and Cell H, the decrease in the discharge capacity was kept small even as the discharge rate was increased from 0.2A to higher rates of 1.5A and 3A, the cells can be kept or retained at a large discharge capacity. As seen in the case of Cell A, even with KOH of 84 wt. % included therein, if the specific gravity of the electrolyte is 1.20, the capacity of the cell was dropped to half the rated capacity thereof at the discharge of 3A. This is presumed to be due to the fact that supply of the OH ions is poor and slow because of such a low specific gravity. Further, even when the specific gravity is as high as 1.31, if the mixing ratio of KOH to the total weight of the three components is less than 75 wt. %, as in the case of Cell I, it is observed that a large increase in the capacity is resulted as observed in the case of Cells A and B.

Thus, though the reason is not clear enough, a sealed type nickel/hydrogen alkaline storage battery using the above-mentioned alkaline electrolyte of the present invention has such advantages that the utilization efficiency of the positive electrolyte is increased, and the diffusion of the OH ions is fast, so that the lowering in the capacity is comparatively small, and in addition generation of oxygen gas from the positive electrode is restricted, to prevent the negative electrode from oxidation and absorption of oxygen gas by the negative electrode is accelerated, resulting in the lowering in the internal pressure.

As for sodium hydroxide in the electrolyte, it serves to improve in the high temperature characteristic, and as for lithium hydroxide in the electrolyte, it serves to improve in the utilization efficiency of the positive electrode.

As for the positive electrode, any desired conventional type in which a small amount of cobalt or cobalt oxides is included may be used, but it is preferable to use one including Co or CoO.

Thus, according to the present invention, since a sealed type nickel/hydrogen alkaline storage battery provided with a nickel electrode as a positive electrode, a hydrogenocclusion alloy electrode as a negative electrode uses such an alkaline electrode that is composed of KOH alone or a mixture of KOH as a main component and LiOH or/and NaOH as a reminder part, and is adjusted in the specific gravity to be in the range of 1.31 to 1.40, preferably, in the range of 1.35 to 1.39 at 20°C, the charge-discharge cycle characteristic is improved.

Further, according to the present invention, since the electrolyte having the specific gravity in the range of 1.31 to 1.40 is composed of the three components of KOH, LiOH and NaOH and KOH accounts for 75 wt. % or more of the total weights of the three components, the capacity retention factor, in other words, the capacity maintenance coefficient is kept at a higher lever as clear from Fig. 2, and thus all the performance requirements of the charge-discharge characteristic, the internal pressure characteristic and the high-rate discharge characteristic can be improved and assured.

As will be apparent to one skilled in the art, various modifications can be made within the scope of the aforesaid description. Such modifications being within the ability of one skilled in the art form a part of the present invention and are embraced by the appended claims.

## Claims

1. A sealed-type nickel-hydrogen alkaline storage battery comprising a container holding (a) a plate assembly including a positive electrode comprising a nickel oxide, a negative electrode comprising a hydrogen-occlusion alloy, and a separator interposed between the positive electrode and the negative electrode, and (b) an alkaline electrolyte which is an aqueous alkaline solution of potassium hydroxide, lithium hydroxide and sodium hydroxide and has a specific gravity in the range of 1.31 to 1.40 at a temperature of 20°C; and a cover hermetically sealed to said container,
characterized in that
the potassium hydroxide accounts for 75 wt. % or more of the total weight of the potassium hydroxide, lithium hydroxide and sodium hydroxide.

2. A sealed-type nickel/hydrogen alkaline storage battery according to claim 1 wherein the specific gravity is in the range of 1.35 to 1.39 at a temperature of 20°C.

3. A sealed-type nickel/hydroxide alkaline storage battery according to claim 1 wherein the positive electrode further comprises cobalt or a cobalt oxide.

## Patentansprüche

1. Abgedichteter alkalischer Nickel-Wasserstoff-Akkumulator, umfassend einen Behälter, in dem gehalten ist (a) eine Plattenanordnung mit einer positiven Elektrode aus einem Nickeloxid, einer negativen Elektrode aus einer wasserstoffokkludierenden Legierung und einem zwischen der positiven Elektrode und der negativen Elektrode angeordneten Separator, und (b) ein alkalisches Elektrolyt, welches eine alkalische Wasserlösung aus Kaliumhydroxid, Lithiumhydroxid und Natriumhydroxid ist und bei einer Temperatur von 20° C ein spezifisches Gewicht im Bereich zwischen 1,31 und 1,40 besitzt, und
eine Abdeckung, die den Behälter hermetisch abdichtet,
**dadurch gekennzeichnet**,
daß der Anteil des Kaliumhydroxids mindestens 75 Gewichts-% des Gesamtgewichts des Kaliumhydroxids, Lithiumhydroxids und Natriumhydroxids beträgt.

2. Abgedichteter alkalischer Nickel-Wasserstoff-Akkumulator nach Anspruch 1, wobei das spezifische Gewicht bei einer Temperatur von 20° C zwischen 1,35 und 1,39 liegt.

3. Abgedichteter alkalischer Nickel-Wasserstoff-Akkumulator nach Anspruch 1, wobei die positive Elektrode zudem Kobalt oder ein Kobaltoxid umfaßt.

## Revendications

1. Accumulateur alcalin scellé du type nickel/hydrogène comprenant un récipient contenant
(a) un assemblage de plaques qui comporte une électrode positive contenant de l'oxyde de nickel, une électrode négative contenant un alliage d'occlusion d'hydrogène et un séparateur placé entre l'électrode positive et l'électrode négative, et
(b) un électrolyte alcalin qui est une solution aqueuse alcaline d'hydroxyde de potassium, d'hydroxyde de lithium et d'hydroxyde de sodium et a une densité comprise entre 1,31 et 1,40 à une température de 20°C, et un couvercle scellé hermétiquement audit récipient,
caractérisé en ce que l'hydroxyde de potassium représente 75 % en poids ou plus du poids total d'hydroxyde de potassium, d'hydroxyde de lithium et d'hydroxyde de sodium.

2. Accumulateur alcalin scellé du type nickel/hydrogène conforme à la revendication 1 dans lequel la densité est comprise entre 1,35 et 1,39 à une température de 20 °C.

3. Accumulateur alcalin scellé du type nickel/hydrogène conforme à la revendication 1 dans lequel l'électrode positive comprend en outre du cobalt ou un oxyde de cobalt.
